Europäisches Patentamt

European Patent Office

Office européen des brevets

(11) Publication number: 0 295 738 B1

# EUROPEAN PATENT SPECIFICATION

(45) Date of publication of patent specification: 05.01.94   (51) Int. Cl.5: **B60K 23/04**

(21) Application number: 88201111.7

(22) Date of filing: 02.06.88

(54) **A method for controlling the engagement and disengagement of an all-wheel drive in a vehicle.**

(30) Priority: **18.06.87 IT 2094787**

(43) Date of publication of application:
**21.12.88 Bulletin  88/51**

(45) Publication of the grant of the patent:
**05.01.94 Bulletin  94/01**

(84) Designated Contracting States:
**DE FR GB**

(56) References cited:
EP-A- 0 245 069    FR-A- 2 509 238
FR-A- 2 577 485    FR-A- 2 591 958
GB-A- 2 118 666    GB-A- 2 146 727
US-A- 4 582 159

(73) Proprietor: **FIAT AUTO S.p.A.**
**Corso Giovanni Agnelli 200**
**I-10135 Torino(IT)**

(72) Inventor: **Travaglio, Gianclaudio**
**Via XXV Aprile 21**
**I-20020 Arese Milan(IT)**
Inventor: **Virgilio, Ugo**
**Via Candiani 101**
**I-20158 Milan(IT)**
Inventor: **Ruspi, Massimo**
**Via Galvani 8**
**I-20124 Milan(IT)**

(74) Representative: **De Carli, Erberto et al**
**ING. BARZANO' & ZANARDO MILANO S.p.A.**
**Via Borgonuovo, 10**
**I-20121 Milano (IT)**

EP 0 295 738 B1

## Description

The present invention relates to a method of controlling the engagement and disengagement of an all-wheel drive in a vehicle, i.e. of automatically engaging and disengaging the all-wheel drive (four driving wheels), as an alternative to the two-wheel drive (two driving wheels), and vice-versa, as a function of the conditions, or of characteristic parameters, of travelling of the vehicle.

Control devices for carrying out a method of this type are already known.

For example, those disclosed in EP-A-0213654 and EP-A-0212721, automatically engage and disengage the all-wheel drive by means of an electromagnetic coupling, as a function of the speed of the vehicle and of the acceleration and deceleration of the constantly engaged wheels.

In particular, these devices control the two-driving-wheel travelling mode until a pre-established travelling speed of the vehicle is reached, with the possibility of engaging the all-wheel drive if, in this situation, accelerations of the constantly engaged wheels higher than a reference limit occur, such as, e.g., on low-adhesion terrains.

These devices show the advantage of a considerable rapidity of response, because the acceleration of the wheels is a characteristic quantity which can be detected extremely quickly; but it does not constitute a control parameter which makes it possible to discriminate the type of terrain, and its adhesion value, because the angular acceleration of the wheels is a function of the applied driving torque only, and shows very high initial peaks, with which it is difficult to select the available adhesion values.

Control devices are also known, such as the control device disclosed in FR-A-2,552,034, which use the difference between the front wheel speed and the rear wheel speed as a control parameter.

By using this parameter, it is possible to select the intervention of the device as a function of the type of terrain, hence of the available adhesion, and on the basis of the applied driving torque.

But the solution proposed in the cited French document does not result to be fully satisfactory, because it just provides the detection of the value of this parameter to compare it to a limit value, and does not take into account the speed difference existing between the front wheels and the rear wheels, when the vehicle runs along a bend at a low speed, nor does it take into account the influence of the vehicle speed on the slip behaviour.

A further device for controlling engagement and disengagement of an all-wheel drive is known from FR-A-2 577 485. This document discloses a method having the features of the preamble of the claim. According to this known method the detected values of the speed of the wheels and of the steering angle are first adapted to take account of mechanical imprecisions and wear, and the corrected values are further processed and filtered in part to obtain values which are then compared with allowable limit values to determine whether the all-wheel drive is to be engaged or not. This document also teaches to correct the speed difference between the front and rear wheels when the vehicle is running on a bend.

A high number of manipulations of the detected values is thus performed which complicates the practical employment of the method and may reduce the rapidity of action of intervention of the all-wheel drive.

The purpose of the present invention is to improve the known device as hereinbefore described, which uses the wheel speed difference as a control parameter, by providing a method of controlling with precision and rapidity the action of engagement or disengagement of the all-wheel drive and optimizing it by discriminating the wheel drive mode essentially on the basis of a sole preselected parameter represented by a preselected vehicle speed limit value.

This purpose is achieved by a method having the features recited in the claim.

Characteristics and advantages of the invention are now illustrated by referring to the hereto attached figures 1 through 3, wherein a preferred form of practical embodiment of the invention is illustrated for exemplifying purposes.

In Figure 1, the transmission is shown of an all-wheel drive vehicle, with a block diagram schematically illustrating the means for carrying out the method of the present invention;

in Figure 2, a detail of Figure 1 is shown on an enlarged scale;

in Figure 3, a flow chart is shown, which relates to the control logic of the method.

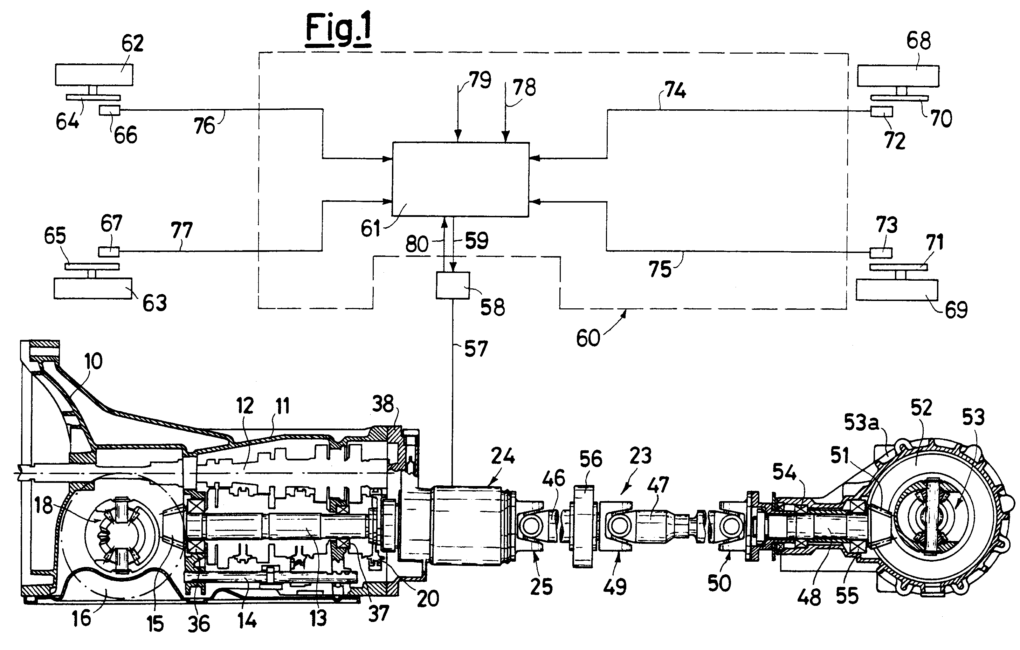

Figure 1 shows a cover 10 of the clutch (not shown) and a gear box 11 of a speed gear of a vehicle equipped with an engine provided with at least one throttle valve, the vehicle being further provided with a steering mechanism and with a disengageable all-wheel drive. The main shaft of the engine driven speed gear is indicated with 12, and an output shaft is indicated with 13. Also shown is one of the rods 14, which are actuated by the gear shift lever, for the purpose of engaging the different transmission ratios.

With the shaft 13, a bevel pinion 15 is integral; said bevel pinion 15 inmeshes with a ring gear 16 of a first differential, indicated in its entirety by 18; in this specific case, the differential 18 is permanently connected to the output shaft 13 and transmits the motion to the wheels of the front axle, which hence are constantly engaged driving wheels.

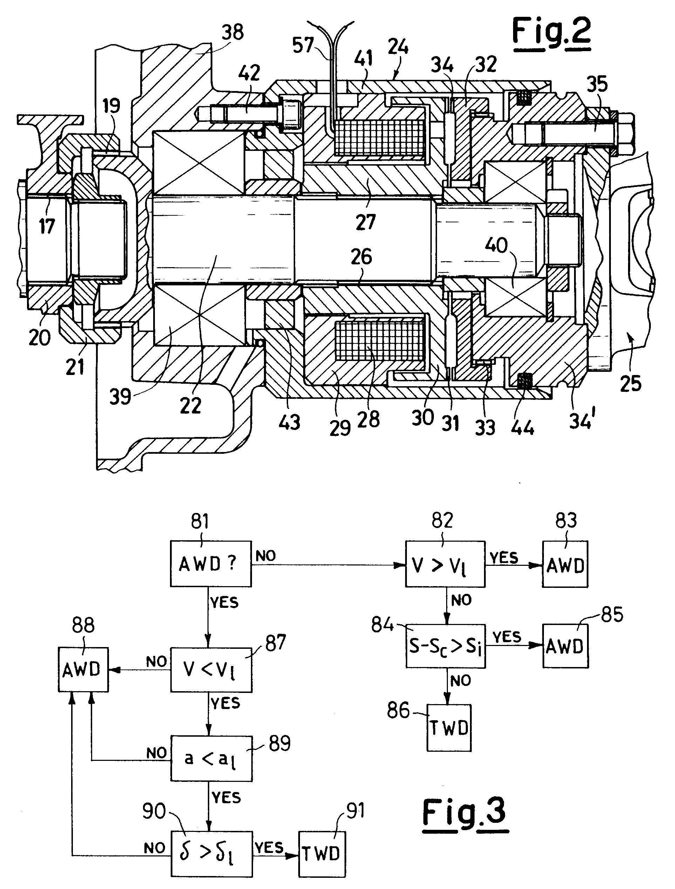

The shaft 13 is connected, by means of splined couplings 17 and 19 (Fig.2), with a hub 20, a ferrule 21 and a shaft 22, which latter is connectable by disengageable connection means 24 in the form of an electromagnetic coupling, and by a universal joint 25, to a transmission shaft 23.

As it is shown in detail in Figure 2, the shaft 22 is connected by means of a coupling 26 with the core 27 of a coil 28 housed in a body 29. Integral with the core 27 is a pulley 30, provided with a peripheral ring of front teeth 31, and opposite to the pulley 30 a plate 32 is positioned, which constitutes the armature of the electromagnetic assembly and is also provided with a peripheral ring of front teeth 34.

The plate 32 is axially movable, by being connected by a splined coupling 33 with a flange 34', in its turn fastened by a screw 35 to a spider of the universal joint 25.

Figure 2 further shows bearings 36 and 37 of the shaft 13, a cover 38 of the gear box 11, bearings 39 and 40 of the shaft 22, a box 41 of the disengageable connection means 24, which is fastened to the cover 38 by screws 42, and sealing rings 43 and 44.

In Figure 1 there are further shown a first section 46, a second section 47, and a third section 48 of the shaft 23. An intermediate support of the shaft is shown at 56. Universal couplings 49 and 50 connect the three sections of the shaft 23.

The end section 48 of the shaft 23 is integral with a pinion 51,which inmeshes with a ring gear 52 of a second differential 53, which is selectively connectable by the disengageable connection means 24 to the output shaft 13,and which is connected with the wheels of the rear axle which, in this specific case, are the auxiliary wheels.

Figure 1 further shows bearings 54 and 55 of the third section 48 of the shaft 23 and a box 53a of the rear axle.

The coil 28 of the disengageable connection means 24 is connected, by means of a lead 57, with actuator means 58 of a control device, indicated in its entirety by 60.

The actuator means 58 are operatively connected with a microcomputer control unit 61, through an actuation line 59 and through a feedback line 80. The control unit 61 comprises memory means and processing means and controls the engagement and disengagement of the all-wheel drive as will be seen later on.

Figure 1 further schematically shows the front driving wheels 62 and 63, constantly engaged, of the vehicle, with which respective tachometrical wheels 64 and 65, equipped with peripheral slots are rigid. Sensors 66 and 67 are operatively associated with the wheels 64 and 65. The tachometrical wheels 64, 65 and the sensors 66, 67 define first detector means detecting the angular speed of the pair of driving wheels 62, 63. The numerals 68 and 69 indicate the auxiliary rear wheels of the vehicle to which respective tachometrical wheels 70 and 71 and sensors 72 and 73 are associated, which define second detector means detecting the angular speed of the auxiliary wheels 68, 69.

The signals of angular speed of the wheels, supplied by the detectors, come, through lines 74,75,76 and 77, to the control unit 61.

To the control unit 61 also arrive signals 78 which are indicative of the vehicle steering angle ($\delta$) detected by third detector means, and signals 79 of the torque Cm applied to the wheels 62,63,68,69, detected by fourth detector means.

In permanent memory means of the control unit 61, correction values (Sc) of the speed difference between the driving and the auxiliary wheels are stored, determined as a function of the speed (v) of the vehicle, e.g., lower than 10 m/sec, and of the steering angle ($\delta$) of the wheels. The stored correction values take into account the difference in angular speed between the pair of driving wheels 62,63 and the pair of auxiliary wheels 68,69 when the vehicle is running on a bend.

In the same memory, there are stored also allowable values (Si) of the speed difference, e.g. comprised within the range of from 5% to 10% of the average angular speed of the wheels, and determined as a function of the speed (v) of the vehicle and of the torque applied to the wheels (Cm).

In the same memory there are further stored limit values of vehicle speed (v1), of vehicle acceleration (a1) and of steering angle ($\delta$1), as a function of the vehicle speed (v).

The control unit 61 is programmed to perform the operating sequences provided for the purpose of controlling the engagement and disengagement of the disengageable connection means 24, as it results from the flow chart of Figure 3.

The microcomputer of the control unit 61 verifies, through the signal from the line 80, the state of the engagement of the all-wheel drive AWD detected by a fifth detector means operatively connected to the actuator means 58.

The microcomputer computes,from the signals of angular speed of wheels 62,63,68,69,the values of angular speed ($\omega$a) of the front driving wheels and the values of angular speed ($\omega$p) of the rear auxiliary wheels, the values of acceleration of the wheels and of the vehicle.

The microcomputer computes, from the above-said signals of angular speed ($\omega$a) and ($\omega$p), the vehicle speed (v) and verifies in a first sequence whether the all-wheel drive AWD is engaged or disengaged (see box 81 in Fig.3). In case the all-wheel drive AWD is disengaged, the microcomputer verifies in a second sequence whether the vehicle speed (v) is greater than a preselected limit value (v1) (box 82 in Fig.3), e.g. 10 m/sec, stored in the memory of the control unit 61. If the verification of the second sequence is yes, the microcomputer controls the disengageable connection means 24 to engage the all-wheel drive AWD (box 83 in Fig. 3), by rendering the shafts 13 and 23 rotatably rigid with each other.

If, on the contrary, the verification of the second sequence is no, i.e. the speed of the vehicle is less than the limit speed value (v1), the microcomputer computes the speed difference (S) between the angular speed of the front wheels 62,63, constantly engaged, and that relating to the auxiliary rear wheels 68,69, from the respective signals,

$$S = (\omega a - \omega p).$$

If the vehicle is running along a bend at a low speed, e.g. lower than 10 m/sec, the microcomputer 61 reads from its memory the correction values (Sc) of the speed difference, as a function of the actual vehicle speed (v) and of the actual steering angle ($\delta$), then corrects the computed value of speed difference (S), by subtracting from it the respective correction value (Sc), and compares the corrected value (S-Sc) of speed difference with the allowable value (Si) of speed difference, e.g., comprised within the range of from 5% to 10% of the average angular speed of the wheels, which is to read from the memory.

The microcomputer verifies in a third sequence if the corrected value (S-Sc) is greater than the allowable limit value (Si) of speed difference (box 84 in Fig.3). If the verification of the third sequence is yes, the microcomputer controls the engagement of the all-wheel drive AWD (box 85 in Fig.3); if, on the contrary, the verification of the third sequence is no, i.e. the corrected value is less than the allowable value (Si), the all-wheel drive AWD is maintained disengaged, and the vehicle operates with the two-wheel drive TWD only (box 86 in Fig.3).

On the contrary, if in the first sequence (box 81 in Fig.3) it is verified that the all-wheel drive AWD is engaged, the microcomputer 61 verifies in a further sequence whether the speed (v) of the vehicle is less than the limit value (v1) of the vehicle speed (box 87 in Fig.3). If the verification of said further sequence is no, the all-wheel drive AWD is maintained in the engagement position (box 88 in Fig.3). If the verification of said further sequence is yes, the microcomputer verifies in a subsequent sequence whether the acceleration (a) of the vehicle is less than the prefixed limit value (a1) (box 89 in Fig.3). If the verification of said subsequent sequence is no, the all-wheel drive AWD is maintained in the engagement position (box 88 in Fig.3). If the verification in said subsequent sequence is yes, the microcomputer verifies in a next sequence whether the steering angle ($\delta$) is greater than the limit value ($\delta$1) (box 90 in Fig.3), and if the verification in said next sequence is yes, the microcomputer controls the disengagement of the all-wheel drive AWD and engages the two-wheel drive TWD (box 91 in Fig.3), whilst, if the verification is no, the microcomputer keeps the all-wheel drive AWD engaged (box 88 in Fig.3).

From the above disclosed computations the correction values (Sc) are missing, if the vehicle runs along a straight road, or along a bend at a medium, or at a high speed.

As the control parameter, instead of the speed difference (S), the % speed difference (Sr) could be used, which is defined as the difference between the front wheel speed value and the rear wheel speed value, expressed as the ratio to the front wheel speed value

$$Sr = \frac{\omega_a - \omega_p}{\omega_a}$$

The above disclosed device could be also accomplished with two tachometrical wheels only, the one integral with the shaft 13, and the other integral with the shaft 23, so to detect, by means of these latter, the revolution speed of respectively the driving wheels 62 and 63, constantly engaged, and of the auxiliary wheels 68 and 69.

## Claims

1. A method of controlling the engagement and disengagement of an all-wheel drive in a vehicle equipped with an engine which is provided with at least one throttle valve, an engine driven speed gear, a wheel steering mechanism, a pair of driving wheels (62, 63) of a first axle driven by a first differential (18) and a pair of auxiliary wheels (68, 69) of a second axle driven by a second differential (53), wherein the first differential (18) is permanently connected to the output shaft (13) of the speed gear and the second differential (53) is selectively connectable by disengageable connection means (24) to the output shaft (13) of the speed gear, a control unit (61), including memory means and being operatively connected to actuator means (58) of the disengageable connection means (24), first detector means (64 - 67) detecting the angular speed of the pair of driving wheels (62, 63), second detector means (70 - 73) detecting the angular speed of the auxiliary wheels (68, 69), third detector means detecting a physical quantity indicative of the wheel steering angle (δ), fourth detector means detecting torque applied to the wheels (62,63; 68,69), the first, second, third and fourth detector means being operatively connected with the control unit (61) to supply respective signals of angular speed of the wheels (62,63; 68,69), the steering angle (δ) and of the torque (Cm) applied to the wheels (62,63; 68,69) to the control unit (61), the control unit (61) comprising processing means and controlling the engagement and disengagement of the all-wheel drive in the steps of:

- processing the speed difference (S; Sr) in the angular speed between the pair of driving wheels (62, 63) and the pair of auxiliary wheels (68, 69) from the respective signals,
- processing a correct value (S-Sc; Sr-Sc) of the speed difference as a difference between said calculated speed difference (S; Sr) and correction values (Sc) stored in the memory, the stored values taking into account the difference in angular speed between the pair of driving wheels (62, 63) and the pair of auxiliary wheels (68, 69) when the vehicle is running on a bend,
- processing from the signals indicative of the angular speed (ωa, ωp) of the driving and the auxiliary wheels (62,63; 68,69) the vehicle speed (v) and the vehicle acceleration (a),
- comparing the corrected value (S-Sc; Sr-Sc) of the speed difference with an allowable value (Si) of said speed difference, the allowable values (Si) being associated to values of vehicle speed (v),

**characterised in that**
the state of the engagement of the all-wheel drive (AWD) is detected by a fifth detector means operatively connected to the actuator means (58) and the control unit (61), whereby the engagement and the disengagement is controlled by the control unit (61) in the following steps:

- in a first sequence (81), it is verified whether the all-wheel drive (AWD) is engaged or disengaged;
- if the all-wheel drive (AWD) is disengaged, it is verified in a second sequence (82), whether the vehicle speed (v) is greater than a limit value (v1) of vehicle speed stored in the memory, the limit value (v1) being associated to the vehicle speed (v);
- if the verification of the second sequence (82) is yes, the all-wheel drive (AWD) is controlled into engagement position (83);
- if the verification of the second sequences (82) is no, it is verified in a third sequence (84), if the corrected value (S-Sc; Sr-Sc) of the wheel speed difference is greater than the allowable value (Si) of speed difference, the correction values (Sc; Sr) being further associated to values of vehicle speed (v) and steering angle (δ) and the allowable value (Si) of speed difference being further determined as a function of torque (Cm) applied to the wheels (62,63; 68,69);
- if the verification of the third sequence (84) is yes, the all-wheel drive (AWD) is controlled into engagement position (85);
- if the verification of the third sequence (84) is no, the all-wheel drive (AWD) is maintained in the disengagement position (TWD; 86);
- if in the first sequence (81) it is verified that the all-wheel drive (AWD) is engaged, it is verified in a further sequence (87), whether the vehicle speed (v) is less than the limit value (v1) of vehicle speed;
- if the verification of said further sequences (87) is no, the all-wheel drive (AWD) is maintained in the engagement position (88);
- if the verification of said further sequence (87) is yes, it is verified in a subsequent sequence (89), whether the vehicle acceleration (a) is less than a limit value (a1) of vehicle acceleration stored in the memory, the limit value (a1) being associated to values of vehicle speed (v);
- if the verification of said subsequent sequence (89) is no, the all-wheel drive (AWD) is maintained in the engagement position (88);
- if the verification of said subsequent sequence (89) is yes, it is verified in a next sequence (90), whether the steering angle (δ) is greater than a limit (δ1) of the steering angle stored in the memory, the limit value (δ1) being associated to values of vehicle speed (v);
- if the verification of said next sequence (90) is no, the all-wheel drive (AWD) is maintained in the engagement position (88);
- if the verification of said next sequence (90) is yes, the all-wheel drive (AWD) is controlled into the disengagement position (TWD; 91).

**Patentansprüche**

1. Verfahren zum Steuern des Eingriffs und des Ausrückens eines Allradantriebs in einem Fahrzeug, welches mit einem Motor versehen ist, der zumindest ein Drosselventil aufweist, mit einem vom Motor angetriebenen Wechselgetriebe, einer Radsteuereinrichtung, einem Paar Antriebsrädern (62, 63) einer ersten Achse, die durch ein erstes Differential (18) angetrieben wird, und einem Paar von Hilfsrädern (68, 69) einer zweiten Achse, die von einem zweiten Differential (53) angetrieben wird, wobei das erste Differential (18) ständig mit der Ausgangswelle (13) des Wechselgetriebes verbunden ist, und das zweite Differential (53) selektiv durch eine ausrückbare Verbindungseinrichtung (24) mit der Ausgangswelle (13) des Wechselgetriebes verbindbar ist, mit einer Steuereinheit (61), die eine Speichereinrichtung aufweist und betriebsmäßig mit einer Betätigungseinrichtung (58) der ausrückbaren Verbindungseinrichtung (24) verbunden ist, einer ersten Detektoreinrichtung (64 - 67), welche die Winkelgeschwindigkeit des Paares der Antriebsräder (62, 63) erfaßt, einer zweiten Detektoreinrichtung (70 - 73), welche die Winkelgeschwindigkeit der Hilfsräder (68, 69) erfaßt, einer dritten Detektoreinrichtung, welche eine physikalische Größe erfaßt, welche den Radlenkwinkel ($\delta$) anzeigt, einer vierten Detektoreinrichtung, welche das an die Räder (62, 63; 68, 69) angelegte Drehmoment erfaßt, wobei die erste, zweite, dritte und vierte Detektoreinrichtung betriebsmäßig mit der Steuereinheit (61) verbunden ist, um jeweils Signale für die Winkelgeschwindigkeit der Räder (62, 63; 68, 69), den Lenkwinkel ($\delta$) und das an die Räder (62, 63; 68, 69) angelegte Drehmoment (Cm) an die Steuereinheit (61) zu liefern, und die Steuereinheit (61) eine Berechnungseinrichtung aufweist und den Eingriff und das Ausrücken des Allradantriebs in folgenden Schritten steuert:

   - Berechnung der Geschwindigkeitsdifferenz (S; Sr) der Winkelgeschwindigkeit zwischen dem Paar der Antriebsräder (62, 63) und dem Paar der Hilfsräder (68, 69) aus den jeweiligen Signalen,
   - Berechnung eines korrekten Wertes (S-Sc; Sr-Sc) der Geschwindigkeitsdifferenz als Differenz zwischen der berechneten Geschwindigkeitsdifferenz (S; Sr) und Korrekturwerten (Sc), die in dem Speicher gespeichert sind, wobei die gespeicherten Werte die Differenz der Winkelgeschwindigkeit zwischen dem Paar der Antriebsräder (62, 63) und dem Paar der Hilfsräder (68, 69) berücksichtigen, wenn das Fahrzeug entlang einer Kurve fährt,
   - Berechnung der Fahrzeuggeschwindigkeit (v) und der Fahrzeugbeschleunigung (a) aus den Signalen, welche die Winkelgeschwindigkeit ($\omega$a, $\omega$p) der Antriebsräder und der Hilfsräder (62, 63; 68, 69) anzeigen,
   - Vergleichen des korrigierten Wertes (S-Sc; Sr-Sc) der Geschwindigkeitsdifferenz mit einem zulässigen Wert (Si) der Geschwindigkeitsdifferenz, wobei die zulässigen Werte (Si) Werten der Fahrzeuggeschwindigkeit (v) zugeordnet sind,

   dadurch **gekennzeichnet,** daß

   der Zustand des Eingriffs des Allradantriebs (AWD) durch eine fünfte Detektoreinrichtung erfaßt wird, die betriebsmäßig mit der Betätigungseinrichtung (58) und der Steuereinheit (61) verbunden ist, wobei der Eingriff und das Ausrücken durch die Steuereinheit (61) in den nachfolgenden Schritten gesteuert werden:

   - in einer ersten Sequenz (81) wird überprüft, ob der Allradantrieb (AWD) in Eingriff steht oder ausgerückt ist;
   - falls der Allradantrieb (AWD) ausgerückt ist, so wird in einer zweiten Sequenz (82) überprüft, ob die Fahrzeuggeschwindigkeit (v) größer als ein Grenzwert (v1) der Fahrzeuggeschwindigkeit ist, der in dem Speicher gespeichert ist, wobei der Grenzwert (v1) der Fahrzeuggeschwindigkeit (v) zugeordnet ist;
   - falls die Überprüfung bei der zweiten Sequenz (82) das Ergebnis JA ergibt, wird der Allradantrieb (AWD) in die Eingriffsposition (83) gesteuert;
   - falls das Ergebnis der zweiten Sequenz (82) NEIN ist, so wird in einer dritten Sequenz (84) überprüft, ob der korrigierte Wert (S-Sc; Sr-Sc) der Radgeschwindigkeitsdifferenz größer als der zulässige Wert (Si) der Geschwindigkeitsdifferenz ist, wobei die Korrekturwerte (Sc; Sr) weiterhin Werten der Fahrzeuggeschwindigkeit (v) und des Lenkwinkels ($\delta$) zugeordnet sind, und der zulässige Wert (Si) der Geschwindigkeitsdifferenz weiterhin als eine Funktion des Drehmoments (Cm) festgelegt wird, welches an die Räder (62, 63; 68, 69) angelegt wird;
   - falls das Ergebnis der Überprüfung der dritten Sequenz (84) JA ist, wird der Allradantrieb (AWD) in die Eingriffsposition (85) gesteuert;

- falls das Ergebnis der Überprüfung der dritten Sequenz (84) NEIN ist, wird der Allradantrieb (AWD) in der Ausrückposition (TWD; 86) gehalten;
- falls in der ersten Sequenz (81) das Ergebnis der Überprüfung ergibt, daß der Allradantrieb (AWD) in Eingriff steht, so wird in einer weiteren Sequenz (87) überprüft, ob die Fahrzeuggeschwindigkeit (v) kleiner ist als der Grenzwert (v1) der Fahrzeuggeschwindigkeit;
- falls das Ergebnis der Überprüfung der weiteren Sequenz (87) NEIN ist, wird der Allradantrieb (AWD) in der Eingriffsposition (88) gehalten;
- falls das Ergebnis der Überprüfung der weiteren Sequenz (87) JA ist, wird in einer darauffolgenden Sequenz (89) überprüft, ob die Fahrzeugbeschleunigung (a) kleiner als ein Grenzwert (a1) der Fahrzeugbeschleunigung ist, der in dem Speicher gespeichert ist, wobei der Grenzwert (a1) Werten der Fahrzeuggeschwindigkeit (v) zugeordnet ist;
- falls das Ergebnis der Überprüfung der nachfolgenden Sequenz (89) NEIN ist, wird der Allradantrieb (AWD) in der Eingriffsposition (88) gehalten;
- falls das Ergebnis der Überprüfung der nachfolgenden Sequenz (89) JA ist, so wird in einer nächsten Sequenz (90) überprüft, ob der Lenkwinkel (δ) größer als ein Grenzwert (δ1) des Lenkwinkels ist, der in dem Speicher gespeichert ist, wobei der Grenzwert (δ1) Werten der Fahrzeuggeschwindigkeit (v) zugeordnet ist;
- wenn das Ergebnis der Überprüfung der nächsten Sequenz (90) NEIN ist, wird der Allradantrieb (AWD) in der Eingriffsposition (88) gehalten;
- wenn das Ergebnis der Überprüfung der nächsten Sequenz (90) JA ist, so wird der Allradantrieb (AWD) in die Ausrückposition (TWD; 91) gesteuert.

**Revendications**

1. Procédé de commande de l'engagement et du désengagement d'une transmission intégrale dans un véhicule équipé d'un moteur qui est pourvu d'au moins un papillon des gaz, une boîte de vitesse entraînée par le moteur, un mécanisme de direction, une paire de roues motrices (62, 63) d'un premier essieu entraîné par un premier différentiel (18) et une paire de roues auxiliaires (68, 69) d'un deuxième essieu entraîné par un deuxième différentiel (53), dans lequel le premier différentiel (18) est relié de façon permanente à l'arbre de sortie (13) de la boîte de vitesse et le deuxième différentiel (53) peut être relié de manière sélective à l'aide de moyens de liaison pouvant être désengagés (24) à l'arbre de sortie (13) de la boîte de vitesse, une unité de commande (61) comprenant des moyens de mémoire et pouvant être reliée de manière opérationnelle à des moyens d'actionnement (58) des moyens de liaison pouvant être désengagés (24), des premiers moyens de détection (64 à 67) qui détectent la vitesse angulaire de la paire de roues motrices (62, 63), des deuxièmes moyens de détection (70 à 73) qui détectent la vitesse angulaire des roues auxiliaires (68, 69), des troisièmes moyens de détection qui détectent une quantité physique indicative de l'angle de braquage des roues (δ), des quatrièmes moyens de détection qui détectent le couple appliqué sur les roues (62, 63; 68, 69), les premiers, deuxièmes, troisièmes et quatrièmes moyens de détection étant reliés de manière opérationnelle à l'unité de commande (61) afin de délivrer à l'unité de commande (61) des signaux respectifs de vitesse angulaire des roues (62, 63; 68, 69), d'angle de braquage des roues (δ) et de couple (Cm) appliqué sur les roues (62, 63; 68, 69), l'unité de commande (61) comportant des moyens de traitement et commandant l'engagement et le désengagement de la transmission intégrale dans les étapes de :
   - traitement de la différence de vitesse (S; Sr) dans la vitesse angulaire entre la paire de roues motrices (62, 63) et la paire de roues auxiliaires (68, 69) à partir des signaux respectifs,
   - traitement d'une valeur correcte (S-Sc; Sr - Sc) de la différence de vitesse comme différence entre ladite différence de vitesse (S; Sr) et des valeurs de correction (Sc) stockées dans la mémoire, les valeurs stockées prenant en compte la différence de vitesse angulaire entre la paire de roues motrices (62, 63) et la paire de roues auxiliaires (68, 69) lorsque le véhicule se déplace dans un virage,
   - traitement des signaux indicatifs de la vitesse angulaire (ωa, ωp) des roues motrices et auxiliaires (62, 63; 68, 69), la vitesse du véhicule (v) et de l'accélération du véhicule (a),
   - comparaison de la valeur corrigée (S-Sc; Sr - Sc) de la différence de vitesse avec une valeur possible (Si) de ladite différence de vitesse, les valeurs possibles (Si) étant associées aux valeurs de vitesse du véhicule (v),
caractérisé en ce que
l'état d'engagement de la transmission intégrale (AWD) est détectée par des cinquièmes moyens de détection reliés de manière opérationnelle aux moyens d'actionnement (58) et à l'unité de commande (61), l'engagement et le désengagement étant commandés par l'unité de commande (61) avec les étapes suivantes :

- on vérifie dans une première séquence (81) si la transmission intégrale (AWD) est engagée ou désengagée;
- si la transmission intégrale (AWD) est désengagée, on vérifie dans une deuxième séquence (82) si la vitesse du véhicule (v) est supérieure à une valeur limite (v1) de vitesse de véhicule stockée dans la mémoire, la valeur limite (v1) étant associée à la vitesse du véhicule (v);
- si la vérification de la deuxième séquence (82) est oui, la transmission intégrale (AWD) est commandée dans la position d'engagement (83);
  si la vérification de la deuxième séquence (82) est non, on vérifie dans une troisième séquence (84) si la valeur corrigée (S - Sc; Sr - Sc) de la différence de vitesse de roue est supérieure à la valeur possible (Si) de différence de vitesse, les valeurs de correction (Sc; Sr) étant en outre associés aux valeurs de vitesse du véhicule (v) et d'angle de braquage ($\delta$) et la valeur possible (Si) de différence de vitesse étant en outre déterminée comme une fonction du couple (Cm) appliqué sur les roues (62, 63; 68, 69);
- si la vérification de la troisième séquence (84) est oui, la transmission intégrale (AWD) est commandée en position d'engagement (85);
- si la vérification de la troisième séquence (84) est non, la transmission intégrale (AWD) est maintenue dans la position de désengagement (TWD; 86);
- si on vérifie dans la première séquence (81) que la transmission intégrale (AWD) est engagée, on vérifie dans une autre séquence (87) si la vitesse du véhicule (v) est inférieure à la valeur limite (v1) de vitesse du véhicule;
- si la vérification de ladite autre séquence (87) est non, la transmission intégrale (AWD) est maintenue dans la position d'engagement (88);
- si la vérification de ladite autre séquence (87) est oui, on vérifie dans une séquence consécutive (89) si l'accélération du véhicule (a) est inférieure à une valeur limite (a1) d'accélération de véhicule stockée dans la mémoire, la valeur limite (a1) étant associée à des valeurs de vitesse du véhicule (v);
- si la vérification de ladite séquence consécutive (89) est non, la transmission intégrale (AWD) est maintenue dans la position d'engagement (88);
- si la vérification de ladite séquence consécutive (89) est oui, on vérifie dans une séquence suivante (90) si l'angle de braquage des roues ($\delta$) est inférieur à une limite ($\delta$1) de l'angle de braquage stockée dans la mémoire, la valeur limite ($\delta$1) étant associée à des valeurs de vitesse du véhicule (v);
- si la vérification de ladite séquence suivante (90) est non, la transmission intégrale (AWD) est maintenue dans la position d'engagement (88);
- si la vérification de ladite séquence suivante (90) est oui, la transmission intégrale (AWD) est commandée dans la position de désengagement (TWD; 91).

Fig.1

EP 0 295 738 B1

Fig.2

Fig.3